# FASCICULE DE BREVET EUROPEEN

(11) **EP 1 362 397 B1**
(45) Date de publication et mention de la délivrance du brevet: **13.10.2004**
(21) Numéro de dépôt: 02704869.3
(22) Date de dépôt: 21.02.2002
(51) Int. Cl.: H02G 1/08

(54) **TETE DE TIRAGE DE TUBES ET PROCEDE DE TIRAGE DE TUBES EN CONDUITES**
ZIEHKOPF FÜR ROHRE UND VERFAHREN ZUM ZIEHEN VON ROHREN IN LEITUNGEN
TUBE DRAWING HEAD AND METHOD FOR DRAWING TUBES IN PIPES

(30) Priorité: 23.02.2001 FR 0102521
(43) Date de publication de la demande: 19.11.2003
(73) Titulaire: FRANCE TELECOM SA, 75015 Paris (FR)
(72) Inventeur: CAMPION, Jean-Luc, F-22700 Saint Quay Perros (FR); LE GOFF, Gérard, F-22700 Louannec (FR); MIGNON, Pierre, 34090 Montpellier (FR)
(74) Mandataire: Bentz, Jean-Paul
(86) Numéro de dépôt international: PCT/FR2002/000644
(87) Numéro de publication internationale: WO 2002/069467

(56) Documents cités:
- DE-B- 2 840 711
- DE-U- 8 520 355
- DE-U- 8 908 918
- FR-A- 2 596 924
- US-A- 3 868 191

## Description

L'invention concerne une tête de tirage de tubes. Elle concerne également un procédé de tirage de tubes en conduite utilisant ladite tête.

Les réseaux appartenant aux entreprises du domaine de l'énergie et des télécommunications sont en partie constitués de conduites souterraines reliant des chambres. Les conduites ont pour rôle d'accueillir des câbles de transport (d'énergie ou de signaux). Elles doivent en premier lieu offrir une protection aux câbles. Par ailleurs, elles doivent faciliter la mise en place de ceux-ci et permettre d'envisager à plus long terme leur récupération et leur remplacement. Les chambres sont disposées de façon à faciliter l'installation des câbles ainsi que d'offrir d'éventuels accès sur câble (afin par exemple de réaliser une connexion).

Afin d'optimiser le patrimoine des conduites existantes, les techniciens pratiquent souvent une opération de tubage dans les conduites enterrées.

Les conduites de distribution des opérateurs historiques ont des diamètres aux alentours de 80mm pouvant accueillir les câbles du réseau téléphonique ayant des diamètres allant jusqu'à 60mm, voire plus dans certains cas.

Dans ce contexte, l'arrivée des câbles optiques de 10 à 18mm de diamètre dans le réseau de distribution, à nécessité leur installation dans le même type de conduites que pour les câbles téléphoniques, de nouveaux travaux étant souvent inutiles et trop coûteux. Or cette opération, parfois pratiquée dans la précipitation, peut empêcher toute réutilisation optimale de la conduite choisie et condamner un espace potentiellement utilisable. Dès lors, les exploitants de tels réseaux ont procédé à des opérations de tubage, c'est-à-dire une pose longitudinale de tubes afin de créer un ensemble de nouvelles conduites plus petites et saillant mieux aux réseaux optiques.

L'opération de tubage consiste à introduire progressivement un ensemble de tubes par l'une des extrémités de la conduite enterrée tout en tirant de l'autre côté de celle-ci sur un filin préalablement présent et accroché à la grappe de tube.

La phase préliminaire consiste à placer dans la conduite le filin d'aiguillage. S'il existe des conduites pré-aiguillées (c.à.d. disposant dès leur production de filins, ce qui est assez rare), beaucoup sont disposées dans le sol sans filin. On procède donc à une opération d'aiguillage afin d'introduire un filin de bout en bout de la conduite.

Une fois le filin disposé il faut arrimer les tubes à celui-ci de manière efficace afin de supporter la traction générée par les frottements entre les tubes et la paroi interne de la conduite. On utilise alors une tête de tirage dénommée également dans ce domaine « clou de tirage », spécialement adapté à la pose du tube ou des tubes.

Par la suite, l'ensemble de l'équipe d'intervention se dispose de manière à procéder à l'introduction des tubes dans la conduite, par tirage.

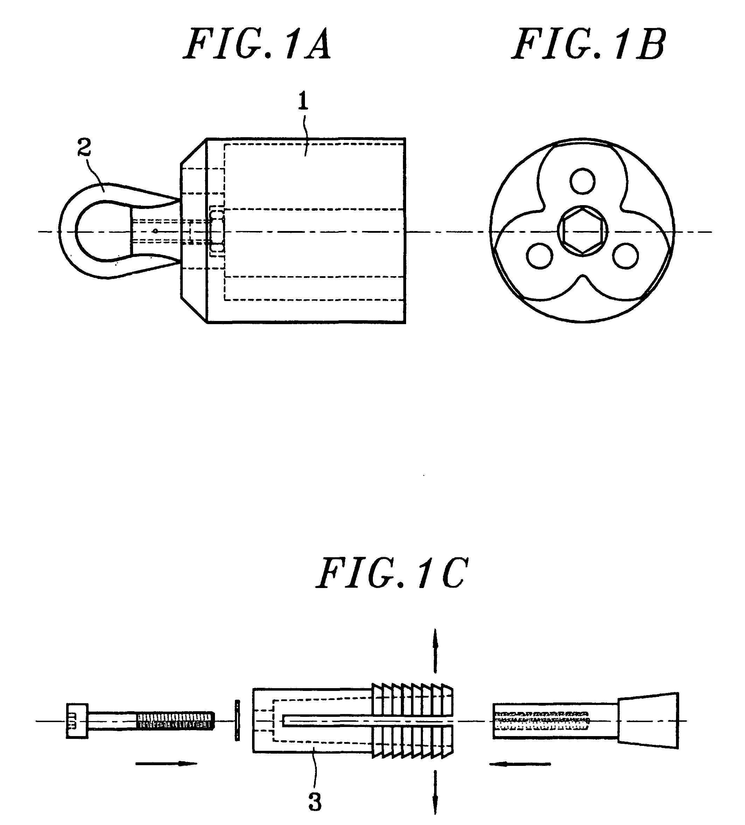

Une tête de tirage selon l'état de la technique est représentée sur les figures 1A, 1B, 1C. Elle comprend un moyen d'arrimage de tubes 1 et un moyen d'accrochage du filin 2. Le moyen d'arrimage comprend une douille 1 creuse à trois compartiments disposés radialement. Chaque compartiment est destiné à recevoir un cylindre 3 fendu selon l'axe longitudinal et cranté. Ce cylindre est de forme creuse et tronconique. Il est prévu pour venir se loger à l'intérieur de l'extrémité d'un tube.

La douille permet d'arrimer un nombre fixe de tubes, trois en l'occurrence. Le système de fixation comprend en réalité trois systèmes de fixation autrement dit, il y a un système de fixation indépendant pour chaque tube. L'opérateur doit donc répéter l'opération d'arrimage pour chaque tube.

En outre la fixation de chaque tube agit suivant l'axe longitudinal des tubes.

L'opération d'arrimage selon cet état de la technique est par conséquent longue et la tenue mécanique de la fixation peut s'avérer déficiente.

Le modèle d'utilité allemand DE 85 20 355 U divulgue une tête de tirage de tubes selon le préambule de la revendication 1.

L'invention a pour but de remédier au problème posé ci-dessus. La solution de ce dernier réside en une tête de tirage de tubes selon la combinaison de caractéristiques de la revendication 1.

Selon un mode de réalisation préféré, la pièce support d'agencement des tubes comporte une platine munie de broches alignées selon une ou plusieurs rangées sur une de ses faces, les broches étant perforées diamétralement suivant un même axe par rangée ; et les éléments de fixation sont réalisés par des goupilles, chaque goupille étant destinée à traverser les broches d'une rangée et les tubes perforés de cette rangée supportés par la pièce afin de réaliser un blocage diamétral simultané de plusieurs tubes.

Selon une autre variante de l'invention, les broches sont amovibles et leur diamètre peut être différent. La tête de tirage est ainsi adaptée à une infrastructure dans laquelle les câbles à tirer seraient de diamètre différent.

Selon une autre variante, les goupilles ont des longueurs pouvant être différente.

Selon une autre variante, la platine comporte plusieurs rangées de broches pouvant avoir un nombre de broches différent. Ces choix pourront être faits dans le cas où l'agencement résultant conduit à une forme circulaire par exemple

Les moyens d'arrimage comportent une enveloppe de blocage de la platine et des goupilles.

Les moyens d'accrochage du filin comportent une tige filetée fixée à la platine et disposée de manière à être dans l'axe des broches.

Les moyens d'accrochage du filin comprennent un anneau muni d'un cylindre fileté destiné à être vissé sur la tige.

La tête comprend en outre un cône de guidage s'étendant du périmètre de la platine jusqu'à la zone filetée de la tige.

La tige filetée est amovible.

L'invention concerne également un procédé de tirage de tubes comprenant l'arrimage d'un ou plusieurs tubes à une tête de tirage et l'accrochage d'un filin à ladite tête, principalement caractérisé en ce qu'il comprend au préalable :
- une opération d'alignement de l'extrémité d'un groupe de tubes, au moyen d'un outil d'alignement,
- une opération de perforation simultanée des tubes du groupe suivant un axe transversal à l'axe longitudinal des tubes au moyen de l'outil d'alignement
et en ce que
- l'arrimage des tubes est réalisé sur une tête de tirage selon l'une quelconque des revendications précédentes.

Selon une autre variante, l'opération d'alignement de l'extrémité des tubes comprend :
- la mise en place des extrémités du groupe de tubes dans l'outil, l'outil comprenant un logement borgne débouchant sur une fente d'insertion afin de recevoir l'extrémité des tubes disposés en rangée,
- le sciage simultané de toutes les terminaisons des tubes à travers une gorge ménagée dans l'outil au-dessus de la rangée de tubes.

Selon une autre variante, l'opération de perforation des tubes comprend la perforation simultanée des tubes d'un groupe introduit dans l'outil, l'outil comprenant un ou plusieurs orifices sur au moins une face perpendiculaire au plan de la rangée de tubes pour le passage d'une perceuse.

D'autres particularités et avantages de l'invention apparaîtront clairement dans la description suivante faite à titre d'exemple non limitatif en regard des dessins annexés sur lesquels :
- les figures 1A, 1B, 1C représentent une tête de tirage selon l'art antérieur,
- la figure 2 représente une tête de tirage selon l'invention, représentée ici en pièces détachées,
- la figure 3A représente la broche d'arrimage des tubes selon l'invention,
- la figure 3B représente de façon plus détaillée le système d'arrimage selon l'invention,
- les figures 3C et 3D illustrent deux exemples d'arrimage selon l'agencement des broches sur la platine,
- la figure 4 représente la tête de tirage après montage des pièces et arrimage des tubes,
- la figure 5 représente l'outil de préparation des tubes avant arrimage sur la tête de tirage.

La tête de tirage selon l'invention comporte un seul système pour l'arrimage simultané de plusieurs tubes 6, les tubes étant fixés à la tête de tirage selon un axe transversal Y.

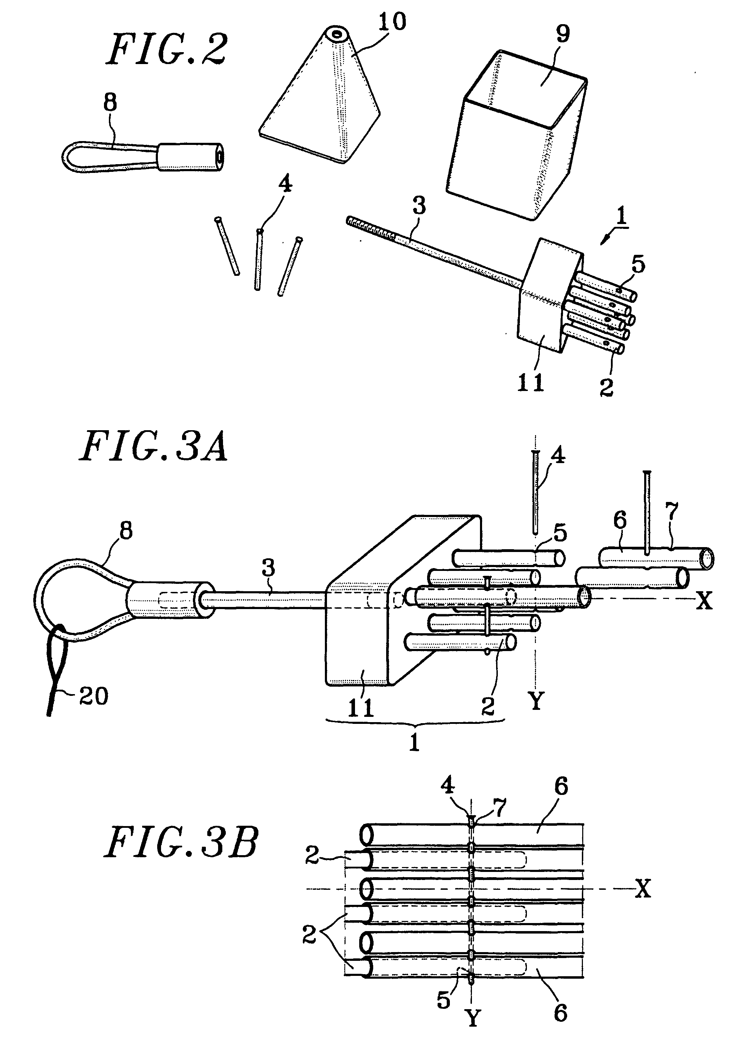

La tête de tirage comporte un système d'arrimage des tubes et un système d'accrochage d'un filin pour le tirage des tubes dans une conduite. Le schéma de la figure 2 illustre les élément constitutifs de la tête selon un mode préféré de l'invention.

Selon cet exemple, le système d'arrimage comprend une pièce support 1 munie de plusieurs broches 2. Chaque broche est munie de deux perforations 5 diamétralement opposées et en coïncidence avec des perforations 7 pratiquées à l'extrémité des tubes 6. D'une manière générale le diamètre des broches 2 est légèrement inférieur à celui des tubes 6 de manière à ce que ces broches puissent recevoir l'extrémité d'un tube. L'écartement entre deux broches 2 est suffisant pour laisser la place à un tube 6. En effet, comme on va le voir dans la suite il n'est pas nécessaire d'avoir autant de broches d'arrimage que de tubes à arrimer puisque des tubes peuvent être intercalés entre les broches et être fixés avec les tubes emboîtant les broches. Cet agencement est illustré par le détail de la figure 3B.

Les broches 2 sont alignées sur une face de la platine 11 de la pièce selon un plan ou plusieurs plans parallèles.

La platine 11 est donc le support des broches de la pièce. Les broches sont amovibles. La platine comporte des trous filetés sur la face prévue pour recevoir les broches choisies selon le besoin et vissées.

Les broches 2 peuvent ainsi avoir des diamètres différents adaptés aux diamètres des tubes à arrimer, la partie filetée des broches peut en revanche avoir un diamètre unique ce qui simplifie la conception de la platine.

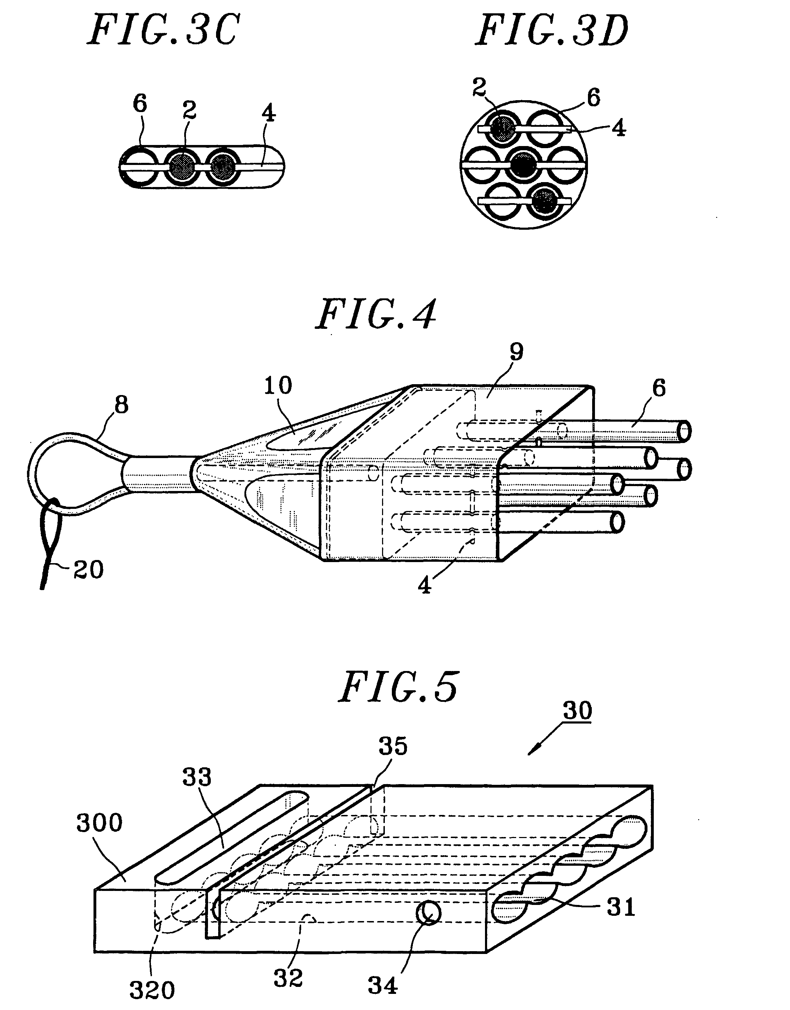

Les figures 3C et 3D illustrent deux exemples d'agencement aboutissant respectivement à un assemblage planaire pour 4 tubes au maximum et l'autre à un assemblage circulaire pour 7 tubes maximum. Des nappes de tubes peuvent être mises en correspondance sur la pièce support avec facilité. Les tubes présents sur une rangée sont ensuite fixés par une goupille 4. En effet, une goupille 4 traverse chaque rangée de broche et fixes les tubes qui sont sur cette rangée.

La platine 11 est également le support d'un élément 3 d'ancrage du filin de traction 20. Cet élément est constitué par une tige filetée 3 fixée à la platine 11 de préférence selon un axe passant par le centre de la face sur laquelle elle est fixée et parallèlement à l'axe longitudinal X des broches. En pratique la tige est filetée à ses deux extrémités, l'une pour être fixée sur la platine de la pièce support et l'autre pour pouvoir visser un anneau 8 auquel sera attaché le filin de traction 20.

La platine permet en outre de servir de butée à un élément de blocage des goupilles 4. Cet élément est constitué par une enveloppe 9 de forme et de dimensions adaptées à celles de la platine. Cette enveloppe est solidaire de la platine. Ainsi, la platine ne peut pas avoir de mouvement de rotation indépendamment de l'enveloppe. L'enveloppe 9 réalise un auto blocage des goupilles 4 et de la platine.

Dans l'exemple qui est donné la platine a une forme parallélépipédique et l'enveloppe 9 également.

On peut bien sur envisager d'autres formes possibles.

La tête de tirage comporte en outre un élément facilitant son déplacement dans la conduite. Cet élément est constitué par une pièce conique 10, percée en son centre pour être glissée sur la tige filetée 3. Cette pièce 10 permet de protéger les bords francs de la platine 11 contre toute aspérité de la conduite, de limiter les frottements de l'ensemble sur la conduite et de plaquer l'enveloppe 9 contre la platine 11.

Cette pièce tronconique 10 pourra être par exemple en matière peu frottante par exemple en téflon.

On a représenté sur la figure 5 un outil permettant la préparation des tubes avant l'arrimage sur la tête de tirage qui vient d'être décrite.

Cet outil se présente sous la forme d'un boîtier 30. Ce boîtier 30 comporte une fente d'insertion 31 des tubes se prolongeant par une cavité creuse 32 s'étendant sensiblement sur toute la longueur du boîtier, le fond de cette cavité constitue une butée 320 pour les tubes insérés. Une paroi du boîtier perpendiculaire à la butée 320 comporte une ouverture 33 s'étendant sur toute la largeur de la paroi. Cette ouverture est située au-dessus de la butée et permet le contrôle de l'alignement des tubes.

Le boîtier comporte un orifice 34 sur une paroi perpendiculaire à la paroi 300 comprenant la fenêtre de contrôle 33. Cet orifice 34 permet de passer la mèche d'une perceuse pour percer les tubes insérés dans le boîtier.

Le boîtier comporte également sur la paroi 300 une gorge 34 s'étendant sur toute la largeur du boîtier dont le fond coïncide avec le plateau inférieur de la cavité ou est légèrement en dessous de ce dernier. La gorge permet de scier les tubes rangés sur le plateau de la cavité, à la longueur désirée par rapport aux orifices réalisés. Ceci permet d'avoir des orifices alignés et en correspondance avec les orifices des broches de la pièce support.

Cet outil 30 permet de réaliser une préparation rapide d'un groupe de tubes alignés sur un plan. Des variantes de réalisation de l'outil peuvent bien sur être envisagées.

Après cette phase de préparation des tubes, les broches de la pièce support sont introduites dans certains tubes du groupe et les tubes de chaque rangée sont fixés sur la pièce support en introduisant une goupille des les orifices qui se trouvent en vis-à-vis sur cette rangée. Les goupilles sont maintenues en position grâce à l'enveloppe 9 que l'on introduit du coté de la tige filetée, et qui va servir également de protection pour l'extrémité des tubes. La pièce tronconique 10 est ensuite introduite autour de la tige filetée 3. Puis l'anneau de traction 8 est vissé sur cette tige 3.

La tête de tirage n'est pas fonction du nombre de tubes à tracter. Des emplacements peuvent rester libres si ce nombre est inférieur à la capacité de la tête. La forme générale de la tête peut être légèrement différente et l'agencement des tubes peut varier tout en restant dans l'esprit de l'invention.

En outre dans l'exemple donné, la platine comporte des broches pour l'arrimage des tubes. Ces broches pourraient être remplacées par des cloisonnements définissant des logements profonds, chacun destiné à recevoir une extrémité de tube.

## Revendications

1. Tête de tirage de tubes comportant des moyens d'accrochage d'un filin (20) et des moyens d'arrimage d'un ou plusieurs tubes (6) comprenant une pièce support (1) d'agencement de l'extrémité de tubes (6) en une ou plusieurs rangées, **caractérisée en ce que** les moyens d'arrimage comportent en outre au moins un élément de fixation transversale des tubes (6) par rangée.

2. Tête de tirage de tubes selon la revendication 1, **caractérisé en ce que** la pièce support (1) d'agencement des tubes comporte une platine (11) munie de broches (2) alignées selon une ou plusieurs rangées sur une de ses faces, les broches (2) étant perforées diamétralement suivant un même axe par rangée et **en ce que** les éléments de fixation sont réalisés par des goupilles (4), chaque goupille (4) étant destinée à traverser les broches (2) d'une rangée et les tubes perforés de cette rangée, supportés par la pièce afin de réaliser un blocage transversal simultané de plusieurs tubes.

3. Tête de tirage de tubes selon la revendication 1 ou 2, **caractérisée** en ce les broches (2) sont amovibles et leur diamètre peut être différent.

4. Tête de tirage de tubes selon l'une quelconque des revendications précédentes, **caractérisée** en ce les goupilles (4) ont des longueurs pouvant être différente.

5. Tête de tirage de tubes selon la revendication 2, **caractérisé en ce que** la platine (11) comporte plusieurs rangées de broches (2) pouvant avoir un nombre de broches différent.

6. Tête de tirage de tubes selon l'une quelconque des revendications précédentes, **caractérisée en ce que** les moyens d'arrimage comportent une enveloppe (9) de blocage de la platine (11) et des goupilles (4).

7. Tête de tirage de tubes selon l'une quelconque des revendications précédentes, **caractérisée en ce que** les moyens d'accrochage du filin comportent une tige filetée fixée à la platine et disposée de manière à être dans l'axe des broches.

8. Tête de tirage de tubes selon la revendication 7, **caractérisé en ce que** les moyens d'accrochage du filin comprennent un anneau muni d'un cylindre fileté destiné à être vissé sur la tige.

9. Tête de tirage de tubes selon les revendications 7 ou 8, **caractérisée en ce qu'**elle comprend un cône de guidage s'étendant du périmètre de la platine jusqu'à la zone filetée de la tige.

10. Tête de tirage de tubes selon l'une quelconque des revendications précédentes, **caractérisée** en ce la tige filetée est amovible.

11. Procédé de tirage de tubes comprenant l'arrimage d'un ou plusieurs tubes à une tête de tirage et l'accrochage d'un filin à ladite tête, et en ce qu'il comprend en outre au préalable :
- une opération d'alignement de l'extrémité d'une rangée de tubes, au moyen d'un outil d'alignement (30),
- une opération de perforation simultanée des tubes de la rangée suivant un axe transversal à l'axe longitudinal des tubes au moyen de l'outil d'alignement (30)
et en ce que
- l'arrimage des tubes est réalisé sur une tête de tirage selon l'une quelconque des revendications précédentes.

12. Procédé de tirage de tubes selon la revendication 11, **caractérisé en ce que** l'opération d'alignement de l'extrémité des tubes comprend :
- la mise en place des extrémités du groupe de tubes dans l'outil (30), l'outil (30) comprenant un logement borgne débouchant sur une fente d'insertion afin de recevoir l'extrémité des tubes disposés en rangée,
- le sciage simultané de toutes les terminaisons des tubes à travers une gorge ménagée dans l'outil au-dessus de la rangée de tubes.

13. Procédé de tirage de tubes selon la revendication 11, **caractérisé en ce que** l'opération de perforation des tubes comprend la perforation simultanée des tubes d'un groupe introduit dans l'outil (30), l'outil (30) comprenant un ou plusieurs orifices sur au moins une face perpendiculaire au plan de la rangée de tubes pour le passage d'une perceuse.

## Patentansprüche

1. Ziehkopf für Rohre mit Mitteln zum Anhängen eines Zugseils (20) und Mitteln zur Befestigung eines oder mehrerer Rohre (6) mit einem Halteteil (1) zur Handhabung des Endes von Rohren (6) in einer oder mehreren Reihen, **dadurch gekennzeichnet, daß** die Befestigungsmittel außerdem pro Reihe wenigstens ein Element zur Querfixierung der Rohre (6) aufweisen.

2. Ziehkopf für Rohre nach Anspruch 1, **dadurch gekennzeichnet, daß** das Halteteil (1) zur Handhabung der Rohre eine Platine (11) aufweist, die an einer ihrer Seiten mit in einer oder mehreren Reihen ausgerichteten Spindeln (2) versehen ist, wobei die Spindeln (2) gemäß ein und derselben Achse pro Reihe diametral durchbohrt sind und die Fixierungselemente von Stiften (4) gebildet sind, wobei jeder Stift (4) zum Durchsetzen der Spindeln (2) einer Reihe und der durchbohrten Rohre dieser Reihe bestimmt ist, die von dem Teil getragen sind, um eine gleichzeitige Querblockierung mehrerer Rohre herzustellen.

3. Ziehkopf für Rohre nach Anspruch 1 oder 2, **dadurch gekennzeichnet, daß** die Spindeln (2) abnehmbar sind und ihr Durchmesser verschieden sein kann.

4. Ziehkopf für Rohre nach einem der vorangehenden Ansprüche, **dadurch gekennzeichnet, daß** die Stifte (4) verschiedene Längen haben können.

5. Ziehkopf für Rohre nach Anspruch 2, **dadurch gekennzeichnet, daß** die Platine (11) mehrere Reihen von Spindeln (2) aufweist, die eine verschiedene Anzahl von Spindeln haben können.

6. Ziehkopf für Rohre nach einem der vorangehenden Ansprüche, **dadurch gekennzeichnet, daß** die Befestigungsmittel eine Hülle (9) zur Blockierung der Platine (1) und der Stifte (4) aufweisen.

7. Ziehkopf für Rohre nach einem der vorangehenden Ansprüche, **dadurch gekennzeichnet, daß** die Mittel zum Anhängen des Zugseils eine Gewindestange aufweisen, die an der Platine befestigt und in der Achse der Spindeln ausgerichtet ist.

8. Ziehkopf für Rohre nach Anspruch 7, **dadurch gekennzeichnet, daß** die Mittel zum Anhängen des Zugseils einen Ring aufweisen, der mit einem Zylinder mit Gewinde versehen ist, der zum Anschrauben an der Stange bestimmt ist.

9. Ziehkopf für Rohre nach einem der Ansprüche 7 oder 8, **dadurch gekennzeichnet, daß** sie einen Führungskonus aufweist, der sich vom Umfang der Platine bis zum Gewindebereich der Stange erstreckt.

10. Ziehkopf für Rohre nach einem der vorangehenden Ansprüche, **dadurch gekennzeichnet, daß** die Gewindestange abnehmbar ist.

11. Verfahren zum Ziehen von Rohren, welches das Befestigen eines oder mehrerer Rohre an einem Ziehkopf und das Anhängen eines Zugseils an dem Kopf umfaßt und im übrigen zuvor aufweist:
- eine Maßnahme der Ausrichtung des Endes einer Reihe von Rohren mittels eines Richtwerkzeugs (30),
- eine Maßnahme der gleichzeitigen Durchbohrung der Rohre der Reihe gemäß einer zur Längsachse der Rohre querverlaufenden Achse mittels des Richtwerkzeugs (30),
und daß
- die Befestigung der Rohre an einem Ziehkopf nach einem der vorangehenden Ansprüche durchgeführt wird.

12. Verfahren zum Einziehen von Rohren nach Anspruch 11, **dadurch gekennzeichnet, daß** die Maßnahme der Ausrichtung des Endes der Rohre umfaßt:
- das Einsetzen der Enden der Gruppe von Rohren in das Werkzeug (30), wobei das Werkzeug (30) einen Blindsitz aufweist, der an einem Einführungsschlitz mündet, um das Ende der in einer Reihe angeordneten Rohre aufzunehmen,
- das gleichzeitige Abschneiden aller Enden der Rohre durch eine im Werkzeug oberhalb der Reihe von Rohren ausgebildete Nut.

13. Verfahren zum Einziehen von Rohren nach Anspruch 11, **dadurch gekennzeichnet, daß** die Maßnahme der Durchbohrung der Rohre die gleichzeitige Durchbohrung der Rohre einer in das Werkzeug (30) eingeführten Gruppe von Rohren umfaßt, wobei das Werkzeug (30) eine oder mehrere Bohrungen für den Durchtritt einer Bohrmaschine an mindestens einer Seite aufweist, die zur Ebene der Reihe von Rohren senkrecht ist.

## Claims

1. Tube-pulling head including means for hitching a rope (20) and means for securing one or more tubes (6) which comprise a support piece (1) for arranging the ends of tubes (6) in one or more rows, **characterized in that** the securing means additionally include at least one element per row for transversely fixing the tubes (6).

2. Tube-pulling head according to Claim 1, **characterized in that** the support piece (1) for arranging the tubes includes a mounting plate (11) provided with prongs (2) aligned in one or more rows on one of its faces, the prongs (2) being perforated diametrically along a common axis in each row, and **in that** the fixing elements are formed by pins (4), each pin (4) being intended to pass through the prongs (2) of a row and the perforated tubes of this row which are supported by the piece, in order to achieve simultaneous transverse immobilization of a plurality of tubes.

3. Tube-pulling head according to Claim 1 or 2, **characterized in that** the prongs (2) are removable and their diameter may be different.

4. Tube-pulling head according to any one of the preceding claims, **characterized in that** the pins (4) have lengths which may be different.

5. Tube-pulling head according to Claim 2, **characterized in that** the mounting plate (11) includes a plurality of rows of prongs (2) which may have a different number of prongs.

6. Tube-pulling head according to any one of the preceding claims, **characterized in that** the securing means include a casing (9) for immobilizing the mounting plate (11) and the pins (4).

7. Tube-pulling head according to any one of the preceding claims, **characterized in that** the means for hitching the rope include a threaded rod fixed to the mounting plate and arranged in such a way as to be in the axis of the prongs.

8. Tube-pulling head according to Claim 7, **characterized in that** the means for hitching the rope comprise a ring provided with a threaded cylinder intended to be screwed onto the rod.

9. Tube-pulling head according to Claim 7 or 8, **characterized in that** it comprises a guide cone extending from the perimeter of the mounting plate to the threaded region of the rod.

10. Tube-pulling head according to any one of the preceding claims, **characterized in that** the threaded rod is removable.

11. Method of pulling tubes, comprising securing one or more tubes to a pulling head and hitching a rope on the said head, and additionally comprising beforehand:
- an operation of aligning the end of a row of tubes using an alignment tool (30),
- an operation of simultaneously perforating the tubes of the row along an axis which is transverse to the longitudinal axis of the tubes using the alignment tool (30),
and in that
- the tubes are secured on a pulling head according to any one of the preceding claims.

12. Method of pulling tubes according to Claim 11, **characterized in that** the operation of aligning the ends of the tubes comprises:
- fitting the ends of the group of tubes into the tool (30), the tool (30) comprising a blind housing opening onto an insertion slot in order to receive the ends of the tubes arranged in a row,
- simultaneously sawing all the terminations of the tubes through a groove made in the tool above the row of tubes.

13. Method of pulling tubes according to Claim 11, **characterized in that** the operation of perforating the tubes comprises simultaneously perforating the tubes of a group introduced into the tool (30), the tool (30) comprising one or more orifices in at least one face perpendicular to the plane of the row of tubes to allow a drill to pass through.
